(19) Europäisches Patentamt
European Patent Office
Office européen des brevets

(11) Publication number: **0 142 583**
**B1**

(12) # EUROPEAN PATENT SPECIFICATION

(45) Date of publication of patent specification: **20.05.87**

(51) Int. Cl.⁴: **B 05 D 1/30,** B 05 C 5/00, B 05 C 13/02, C 03 C 17/00

(21) Application number: **83306954.5**

(22) Date of filing: **14.11.83**

(54) **Process and apparatus for coating the surfaces of containers with coating material.**

(43) Date of publication of application:
**29.05.85 Bulletin 85/22**

(45) Publication of the grant of the patent:
**20.05.87 Bulletin 87/21**

(84) Designated Contracting States:
**AT BE CH DE FR GB IT LI LU NL SE**

(56) References cited:
**EP-A-0 043 077**
**DE-A-2 824 403**
**US-A-4 092 953**
**US-A-4 225 638**

(73) Proprietor: **KYOWA DENKI KAGAKU K.K.**
**2970-3 Ishikawa-cho**
**Hachiouji-shi Tokyo (JP)**

(72) Inventor: **Katsuyama, Iwao**
**No. 494-42 Imajyuku-cho**
**Moriyama-shi Shiga-ken (JP)**
Inventor: **Okuzumi, Aijiro**
**No. 2288 Kamikawa-cho**
**Hachiouji-shi Tokyo (JP)**

(74) Representative: **Jennings, Roy Alfred et al**
**GILL JENNINGS & EVERY 53-64 Chancery Lane**
**London WC2A 1HN (GB)**

**EP 0 142 583 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process and an apparatus for coating the surfaces of containers with a material.

Nowadays coating materials consisting of, for example, plastics materials are often applied to the surfaces of containers, e.g. glass bottles for soft drinks, in order to strengthen the containers so that they can be used repeatedly with less risk of breakage. Such coating of containers has been conventionally conducted mainly either by spraying a coating material in a powdery state onto the container or by dipping the containers in a liquid medium containing a coating material. However, these methods are disadvantageous in that it is very difficult when using them to control the thickness of the coating layer.

As a way for overcoming this disadvantage, it has been proposed to apply a liquid coating to the surfaces of containers by means of spray nozzles. This method makes it possible to obtain a relatively homogeneous coating and also to carry out the coating of a series of containers continuously. Generally, a plurality of containers can have a coating material successively applied to their surfaces by being successively transported into a coating zone and having the material applied to them by means of spray nozzles in the zone.

A process and apparatus which operates in this way is disclosed, for example in DE—A—28 24 403. In the process and apparatus disclosed in this prior specification, the containers are transported horizontally and are rotated about horizontal axes as they are transported and the liquid coating material is caused to flow downwards on to the containers from above.

However, this process and apparatus have the drawback that a sophisticated mechanism is needed to operate the spray nozzles in the coating zone. For example, in the process and apparatus disclosed in DE—A—28 24 403 a precise mechanism is necessary by which the nozzles can be moved to follow exactly a container being transported horizontally in the coating zone and then be moved backwards (i.e. in a direction opposite to the direction of transport of the containers) in order to commence the coating of a subsequent container. Similar considerations apply to the process and apparatus disclosed in Japanese Patent Application Publication No. 7091/1982.

In addition to the need for a complex mechanism for controlling the movement of the nozzles, the process suffers from a further disadvantage that, as the nozzles are being moved backwards, some of the liquid coating material will drip from the nozzles without being applied to any of the containers. To avoid the loss of liquid coating material by dripping during the backward movement of the nozzles, a means has been proposed for temporarily stopping the supply of the liquid coating material to the nozzles and sucking back the material at the moment when each nozzle has finished applying the coating onto a particular container (Japanese Patent Application Public Disclosure No. 139858/1980). However, this approach is not very desirable from the operational standpoint because the means for supplying the liquid coating material has to be caused to function against its intrinsic action. In addition, in spite of attempts to suspend the supply of the liquid coating material by the above-mentioned means, it is impossible to prevent completely the dripping of the liquid material. Problems also arise in that, owing to the temporary stopping of the supply of the liquid material, clogging of the nozzles with the material occurs and further there is difficulty in producing a homogeneous coating on containers with the material when the supply of the material is restarted.

The principal object of the present invention is to overcome the above-mentioned difficulties and to provide a process and an apparatus by which the coating of containers can be accomplished easily and effectively.

It has now been found that in coating the surfaces of a plurality of containers, which are being continuously transported, with a liquid material, efficient coating can be achieved by transporting the containers, while they are being coated, in an at least substantially vertical direction. This can be done even without the provision of a complicated mechanism for the movement of spray nozzles and/or means for temporarily stopping the supply to the nozzles of the material.

Thus, according to one aspect of the present invention, a process for coating the surfaces of a plurality of containers with a liquid material, in which the containers are continuously transported in succession and are rotated about horizontal axes, and the liquid material is caused to flow downwards onto the containers from above as disclosed in DE—A—28 24 403, is characterised in that the containers are transported in a substantially vertical direction, the liquid material flows from just above the uppermost container of the containers being moved substantially vertically to coat the surface of the uppermost container with the liquid material, and when the coating of the uppermost container has just been completed, the next succeeding container becomes the uppermost container of the containers being moved substantially vertically and is coated with the liquid material.

Preferably the containers are moved vertically downwards as they are coated.

The invention also consists, according to another of its aspects, in apparatus for coating the surfaces of containers with liquid material, the apparatus comprising means for moving the containers continuously in succession at predetermined intervals, means for rotating the containers about horizontal axes as they are moved, nozzle means for causing the liquid material to flow downwards onto the containers, and means for supplying the liquid material to the nozzle means, as disclosed in DE—A—28 24 403, characterised in that the means for moving the containers moves the containers substantially vertically and the nozzle means is located just above the uppermost container being moved substantially vertically.

In the present invention, the uppermost container of the containers being continuously and consecutively transported in a substantially vertical direction, and preferably downwards, is coated with a liquid material flowing downwards from a fixed location. Accordingly, there is no need for a mechanism for moving a nozzle or nozzles to follow a particular container as it is coated as is required in the conventional process and apparatus where containers are transported in a horizontal direction while they are being coated. Further, in the present invention, the liquid material can be caused to flow downwards continuously, i.e. without being temporarily stopped between the coating of one container and the next, as the containers are coated in turn with the material. It is therefore possible to avoid the problems caused by discontinuing the supply of the liquid material, such as the clogging of the nozzles with the material or the dripping of the material from the nozzles. The present invention has the further advantage that the continuous supply of the coating material makes it possible to apply the same amount of coating material to each container. Thus, the coatings produced on the containers can be made uniform and thin.

An example of a process and of an apparatus in accordance with the invention will now be described with reference to the accompanying drawings, in which:—

Figure 1 is a perspective view of the apparatus as a whole;

Figure 2 is a diagram showing a spray nozzle system forming part of the apparatus;

Figure 3 is a partly sectional plan view of a nozzle body forming part of the nozzle system;

Figure 4 is a plan view of a nozzle-supporting means; and

Figure 5A and 5B are diagrams showing in plan and side view the relative positions of a nozzle and containers during coating of the containers.

Containers or bottles to be coated are conveyed along a suitable line (not shown) and then transferred by a loading means (not shown) into a coating plant such as shown in Figure 1. The plant includes a means for transporting a plurality of containers continuously at predetermined intervals while rotating the containers about horizontal axes. In the embodiment as shown in Figure 1, the transporting means comprises a container-transporting mechanism and a container-rotating mechanism, in which the container-transporting mechanism includes a chain means 2 to transporting a plurality of holders 1 supporting containers 13 and a motor 3 for driving the chain means 2, while the container-rotating mechanism includes gears 5 each rotatably mounted onto a shaft 4 pressing a container 13 onto a holder 1, a chain means 6 engaged with the gears 5 for rotating the respective containers and a motor 17 for driving the chain means 6. The arrangement, however, is not limited to that illustrated and any other device may be used for transporting the containers. For example, as a container-rotating mechanism, there may be used wheels, which rotatably support the containers, and a belt means frictionally engaged with the wheels.

With the aid of a transporting means as mentioned above, the containers go firstly through a primer zone 20 while being rotated about their horizontal axes. In the primer zone the respective containers are applied with a priming agent, by any suitable means. In the embodiment as shown in Figure 1, a cloth 8 is arranged to be wetted by capillary action with a priming agent stored in vessels 7 and to be contacted with the surfaces of the containers being transported so that the priming agent in the cloth is applied onto the surfaces of the containers. After the primer zone, the respective containers go through a preheating zone 9 so as to dry the priming agent.

The containers then one by one change their direction of travel from the horizontal direction to the vertical direction so that they are applied with a coating liquid material flowing downward continuously, according to the present invention. There is provided a nozzle means 10 just above the uppermost container being moved vertically. Thus, the liquid material flows downward onto said uppermost container so as to coat the surface thereof. The nozzle means generally includes a plurality of openings to which there is continuously supplied the liquid material by a coating material-supplying means 11 from tanks 12 for the material.

There is illustrated in Figure 2 an embodiment of a nozzle means and a means for continuously supplying a liquid coating material to the nozzle means, suitable for use in the present invention. The liquid coating material is stored in a pair of tanks 12. One of the tanks is connected with a number of gear pumps 22 (three in the drawings) and the other tank is connected with a number of gear pumps 23 (also three). The gear pumps 22 and 23 are arranged in three pairs and each pair is operated by means of an oil-motor 21, through which oil from an oil-tank 25 is circulated by means of an oil-pump 24. The circulation of oil through each oil motor can be controlled by an associated solenoid valve 26. Thus the liquid material pumped by the gear pump 22 and the liquid material pumped by the gear pump 23, via three-way valves 27 and 28 respectively, are mixed together in a mixing element 29 and then supplied to the nozzle means 10 through a mixing tube 33. When the coating plant is stopped, the nozzle means can be cleaned by switching the valves 27, 28 so that a solvent in a tank 32 passes, with the aid of compressed air supplied by an air-compressor 30, through the nozzle means 10 via the mixing tubes 33.

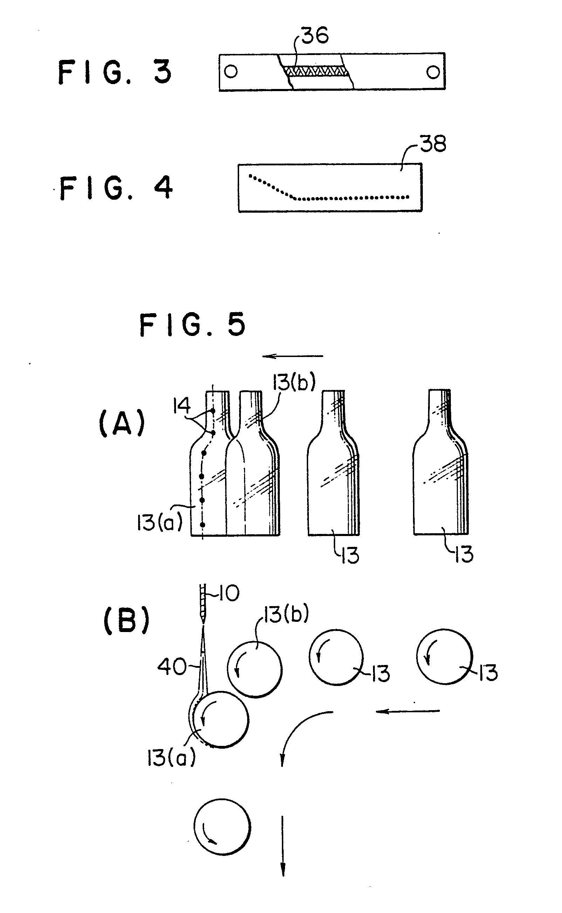

In the lower portion of Figure 2, the nozzle means 10 is shown in vertical cross-section. The nozzle means comprises a body 34 having a header 35 therein. There is provided a spiral member 36 in the header 35 so that the coating liquid material is homogenized (Figure 3). At the bottom of the header 35 there are provided a plurality of openings and, to each of the openings there is connected a pipe means from which the liquid material is discharged. The pipes 37 are preferably supported by a plate 38. In a preferred embodiment according to the present invention, the plurality of openings (and hence, the plurality of pipes 37) are arranged so as to correspond to the contour of the container 13 (refer to Figure 4), as will be explained in more detail later.

In Figure 5 there is illustrated the relationship between the location of the nozzle means and that of the containers to be subject to the coating operation according to the present invention. Each container 13 is first transported in the horizontal direction (from the right to the left in the drawing) and then in the vertical direction (downward in the drawing), while being rotated about its horizontal axis. The interval between the containers is so predetermined that, when the uppermost container being transported vertically (13(a) in Figure 5) has rotated at least one time about its horizontal axis and the coating of this uppermost container with the liquid material 40 flowing down from the above has been completed, the subsequent container (13(b) in Figure 5) becomes the new uppermost container of the containers being vertically transported. Here, the liquid material on the surface of an upper container will not fall down onto the surface of a lower container, since all the containers are rotated about their horizontal axes.

Containers in common use, glass bottles in particular, frequently have a curved contour in longitudinal cross section. In such a case, if the openings of the nozzle means are arranged along a straight line traverse to the direction of travel of the containers, there is a problem that, before completion of the coating of the uppermost container 13(a), a portion of the subsequent container 13(b) (more specifically, the wider portion of the container 13(b)) will interrupt some of the liquid material 40 to be applied on the container 13(a) so that the portion of the container 13(b) is undesirably coated in advance. For overcoming such problems, in a preferred embodiment according to the present invention, a nozzle means comprises a plurality of openings 14 and the plurality of openings are arranged so as to follow the contour of the container as shown in Figure 5(A). In this way, it is always assured that the coating liquid material is caused to flow down continuously so that, only after the completion of the coating of the uppermost container, will the material coat the subsequent container which has now become the new uppermost container.

While the illustration is made with respect to a case where plural containers are first transported in the horizontal direction and then in the vertical direction downward, the present invention can of course be equally applied to a case where the containers are moved first in the vertical direction upward and then in the horizontal direction. In the embodiment as illustrated, the nozzle means is fixed so as to carry out coating of only one line of containers being continuously transported. However, it is also possible to make the nozzle means movable along a line transverse to the direction of travel of the containers. In this manner, two or more lines of containers can be coated alternately by moving the nozzle means.

The containers on which the coating has been completed in the above-mentioned manner are further transported through a zone 15 for drying and curing the coating material and further a cooling zone 16 and then transferred by unloading means (not shown) into a product-conveying line. However, it should be understood that the arrangement of the zones as illustrated is only for exemplification, and the alternation of the arrangement of these zones and/or addition of a further zone or zones may be made, if needed.

**Claims**

1. A process for coating the surfaces of a plurality of containers (13) with a liquid material, in which the containers (13) are continuously transported in succession and are rotated about horizontal axes (4), and the liquid material is caused to flow downwards onto the containers (13) from above, characterised in that the containers (13) are transported in a substantially vertical direction, the liquid material flows from just above (10) the uppermost container of the containers being moved substantially vertically to coat the surface of the uppermost container with the liquid material, and when the coating of the uppermost container has just been completed, the next succeeding container becomes the uppermost container of the containers being moved substantially vertically and is coated with the liquid material.

2. A process according to Claim 1, in which the containers (13) are moved downwards in the substantially vertical direction.

3. Apparatus for coating the surfaces of containers (13) with liquid material, the apparatus comprising means (1, 2) for moving the containers (13) continuously in succession at predetermined intervals, means (4, 5, 6) for rotating the containers (13) about horizontal axes as they are moved, nozzle means (10) for causing the liquid material to flow downwards onto the containers (13), and means (11) for supplying the liquid material to the nozzle means (10) characterised in that the means (1, 2) moves the containers (13) substantially vertically and the nozzle means (10) is located just above the uppermost container being moved substantially vertically.

4. Apparatus according to Claim 3, wherein the nozzle means (10) comprises a plurality of openings (14) from which the liquid material is discharged, and said plurality of openings (14) are arranged so as to correspond to the shape of the containers to be coated with the liquid material.

5. Apparatus according to Claim 3, or Claim 4, in which the means (1, 2) for moving the containers (13) in the substantially vertical direction, moves the containers (13) downwards.

## Patentansprüche

1. Verfahren zum Beschichten von Oberflächen einer Vielzahl von Behältern (13) mit einem flüssigen Material, wobei die Behälter (13) kontinuierlich hintereinander transportiert werden und um ihre horizontalen Achsen (4) gedreht werden und wobei das flüssige Material von oben auf die Behälter (13) abwärts fließt, dadurch gekennzeichnet, daß die Behälter (13) in im wesentlichen vertikaler Richtung transportiert werden, daß das flüssige Material knapp über (10) dem obersten der im wesentlichen vertikal bewegten Behälter abfließt, um die Oberfläche des obersten Behälters mit flüssigem Material zu beschichten, und daß knapp nach der Fertigstellung der Beschichtung des obersten Behälters der nächstfolgende Behälter zum obersten der in im wesentlichen vertikaler Richtung bewegten Behälter wird und mit dem flüssigen Material beschichtet wird.

2. Verfahren nach Anspruch 1, wobei die Behälter (13) abwärts in im wesentlichen vertikaler Richtung bewegt werden.

3. Vorrichtung zum Beschichten von Oberflächen von Behältern (13) mit flüssigem Material, welche Mittel (1, 2) zum kontinuierlichen, nacheinander in vorbestimmten Intervallen erfolgenden Bewegen der Behälter, Mittel (4, 5, 6) zum Drehen der Behälter (13) um ihre horizontalen Achsen während der Bewegung, eine Düsenvorrichtung (10), welche ein Strömen des flüssigen Materials in Abwärtsrichtung auf die Behälter bewirkt, und Mittel (11) zum Zuführen des flüssigen Materials zur Düsenvorrichtung (10) aufweist, dadurch gekennzeichnet, daß die Mittel (1, 2) die Behälter (13) in im wesentlichen vertikaler Richtung bewegen und daß die Düsenvorrichtung (10) gerade über dem obersten der in im wesentlichen vertikaler Richtung bewegten Behälter angeordnet ist.

4. Vorrichtung nach Anspruch 3, wobei die Düsenvorrichtung (10) eine Mehrzahl von Öffnungen (14) aufweist, aus denen flüssiges Material ausströmt, und die Mehrzahl der Öffnungen (14) so angeordnet sind, daß sie der Form der mit dem flüssigen Material zu beschichtenden Behälter entsprechen.

5. Vorrichtung nach Anspruch 3 oder 4, wobei die Mittel (1, 2) zum Bewegen der Behälter (13) in im wesentlichen vertikaler Richtung die Behälter (13) abwärts bewegen.

## Revendications

1. Procédé de revêtement des surfaces de plusieurs récipients (13) par un matériau liquide, selon lequel les récipients (13) sont transportés de façon continue successivement et sont entraînés en rotation autour d'axes horizontaux (4) et le matériau liquide s'écoule vers le bas sur les récipients (13), à partir du haut, caractérisé en ce que les récipients sont transportés en direction sensiblement verticale, le matériau liquide s'écoule d'un emplacement se trouvant juste au-dessus (10) de récipient supérieur parmi les récipients qui sont déplacés en direction sensiblement verticale afin que la surface du récipient supérieur soit revêtue du matériau liquide, et, lorsque le revêtement du récipient supérieur a juste été terminé, le rècipient suivant devient le matériau supérieur parmi les récipients déplacés en direction sensiblement verticale et est revêtu du matériau liquide.

2. Procédé selon la revendication 1, dans lequel les récipients (13) sont déplacés vers le bas en direction sensiblement verticale.

3. Appareil de revêtement des surfaces de récipients (13) à l'aide d'un matériau liquide, l'appareil comprenant un dispositif (1, 2) de déplacement continu des récipients (13) successivement à intervalles prédéterminés, un dispositif (4, 5, 6) destiné à faire tourner les récipients (13) autour d'axes horizontaux lorsqu'ils sont déplacés, un dispositif (10) à buses destiné à provoquer l'écoulement vers le bas du matériau liquide sur les récipients (13), et un dispositif (11) destiné à transmettre le matériau liquide vers le dispositif à buses (10), caractérisé en ce que le dispositif (1, 2) déplace les récipients (13) en direction sensiblement verticale, et le dispositif à buses (10) est placé juste au-dessus du récipient supérieur qui est déplacé en direction sensiblement verticale.

4. Appareil selon le revendication 3, dans lequel le dispositif à buses (10) comporte plusieurs ouvertures (14) qui évacuent le matériau liquide, et les ouvertures (14) sont disposées afin qu'elles correspondent à la configuration des récipients á revêtir du matériau liquide.

5. Appareil selon l'une des revendications 3 et 4, dans lequel le dispositif (1, 2) de déplacement des récipients (13) en direction sensiblement verticale déplace les récipients (13) vers le bas.

FIG. 1

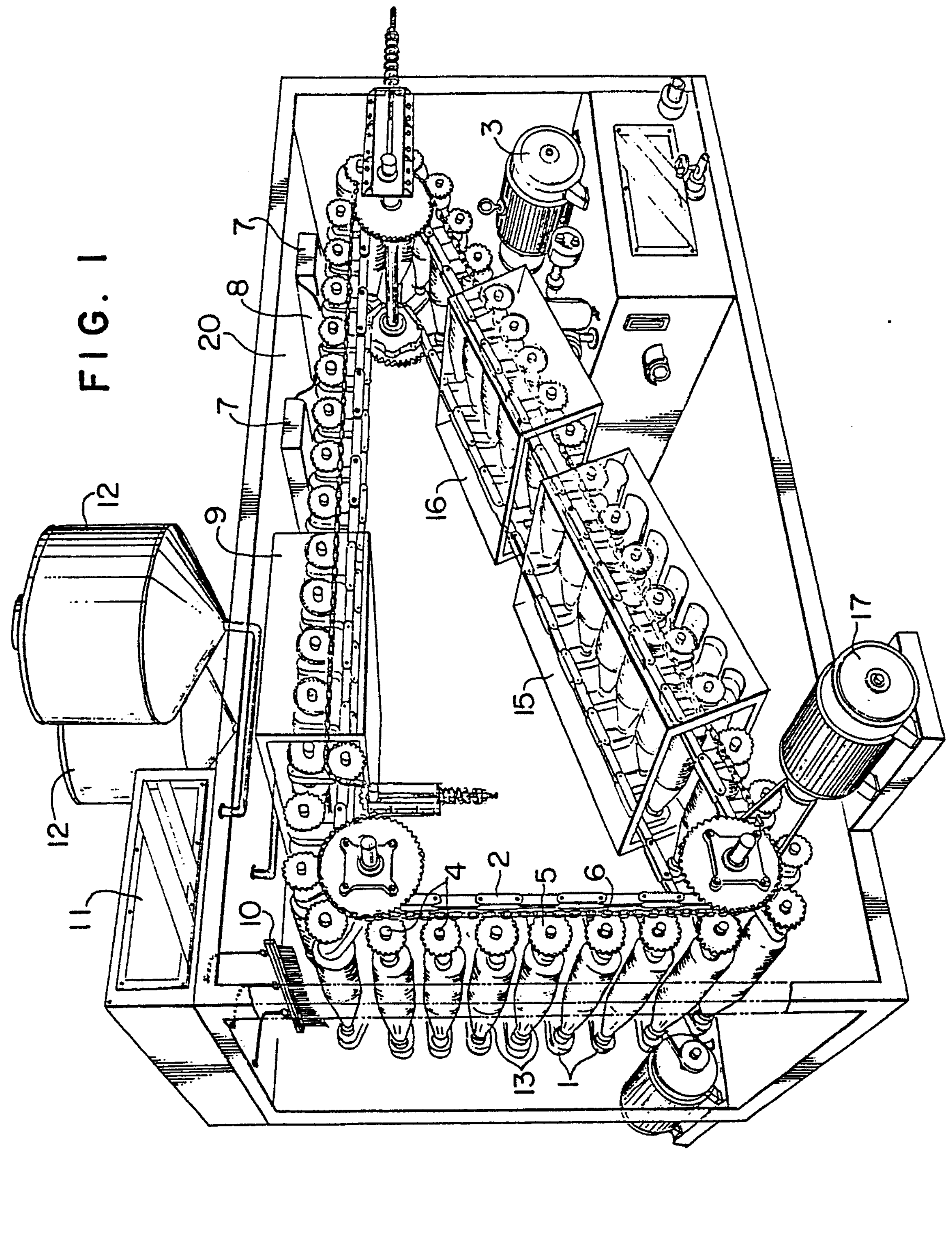

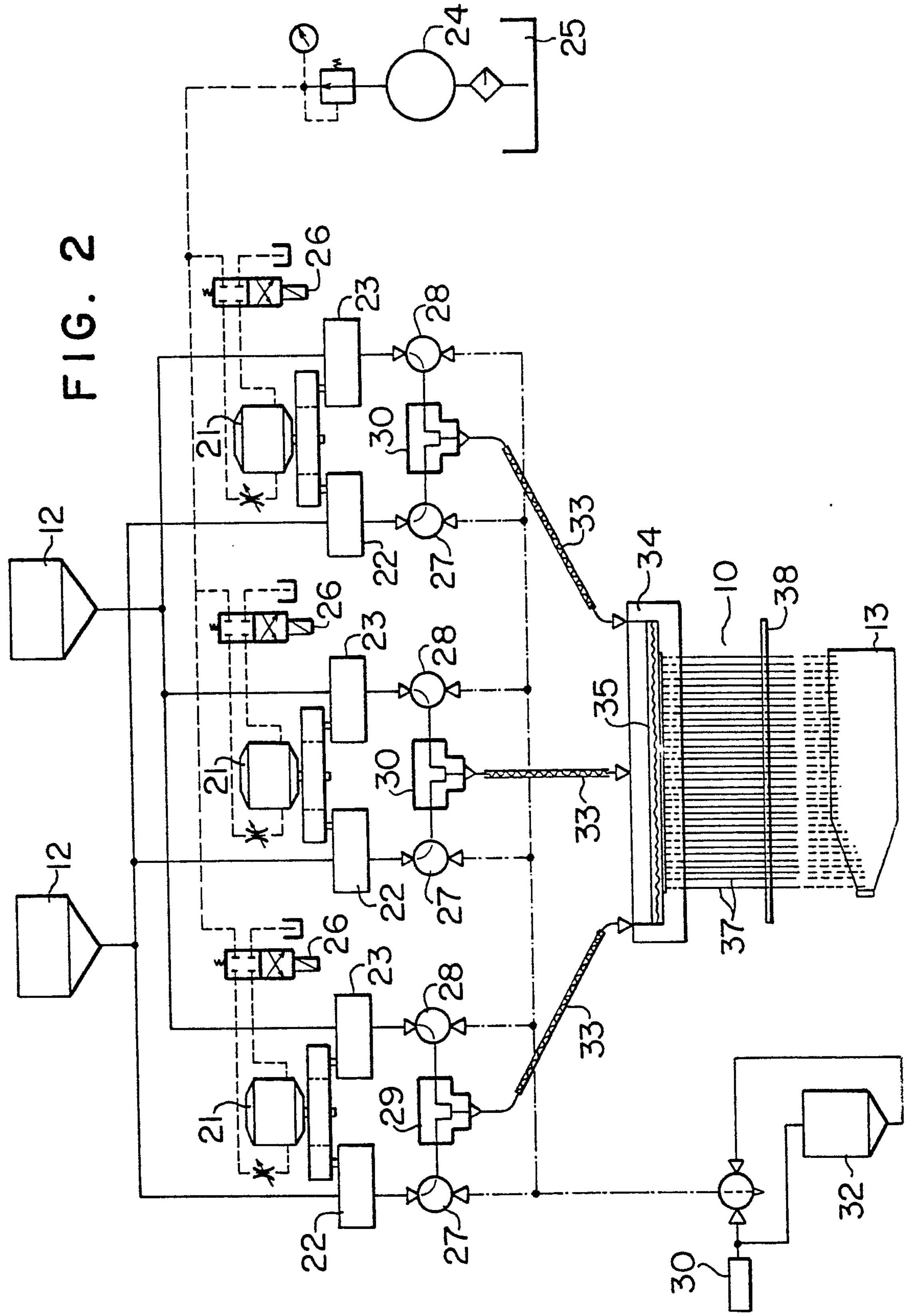
12
12
21
21
21
22
22
22
23
23
23
24
25
26
26
26
27
27
27
28
28
28
29
30
30
30
32
33
33
33
34
35
10
38
13
37

FIG. 2

FIG. 3

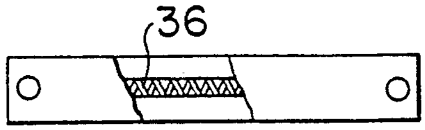


FIG. 4

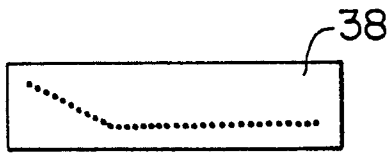


FIG. 5